Europäisches Patentamt

European Patent Office

Office européen des brevets

(11) Publication number: **0 220 897**
**B1**

# EUROPEAN PATENT SPECIFICATION

(45) Date of publication of the patent specification:
04.07.90

(51) Int. Cl.[5]: **C08L 23/02, C08K 5/34,**
**C08L 57/00, C08L 33/02**

(21) Application number: 86308076.8

(22) Date of filing: **17.10.86**

(54) **Polyolefin compositions.**

(30) Priority: **17.10.85 JP 233000/85**

(43) Date of publication of application:
**06.05.87 Bulletin 87/19**

(45) Publication of the grant of the patent:
**04.07.90 Bulletin 90/27**

(84) Designated Contracting States:
**DE FR GB IT NL**

(56) References cited:
**EP-A- 0 107 615**
**DE-A- 2 155 940**

(73) Proprietor: **SUMITOMO CHEMICAL COMPANY, LIMITED,
Kitahama 4-chome 5-33, Chuo-ku Osaka 541(JP)**

(72) Inventor: **Yamada, Kunio, 4-5-11-302, Takahama,
Chiba-shi Chiba(JP)**
Inventor: **Miyazaki, Kohzoh, 6-7-12, Nagauraekimae
Sodegaura, Kimitsugun Chiba(JP)**
Inventor: **Nomura, Ryouichi, 1-9, Yushudainishi,
Ichihara-shi Chiba(JP)**

(74) Representative: **Moore, Anthony John et al, Gee & Co.
Chancery House Chancery Lane, London
WC2A 1QU(GB)**

## Description

This invention relates to polyolefin compositions which not only exhibit excellent weather resistance but which are also free from coloration or discoloration, the compositions comprising a polyolefin incorporating a stabilizer having a triazine ring in its molecule and a polymer having an acidic hydrogen atom.

In recent years, the outdoor use of polyolefin has tended to increase steadily and is expected to continue to increase. With this tendency, weather resistance sufficiently great for various end uses has been demanded for polyolefin resins.

The latest improvements in weather resistance are particularly remarkable, and various studies on ultraviolet light absorbents, hindered amine-based light stabilizers and quenchers and on formulations of these additives have been conducted as reported, e.g., in Japanese Patent Application (OPI) Nos. 21450/79, 70347/79, 133239/84 and 27936/84 (the term "OPI" as used herein means "unexamined published application") and Japanese Patent Publication Nos. 22625/70 and I6459/85.

However, since these additives for improving weather resistance readily bloom to the surface of molded articles, their effects do not last long. In order to prevent blooming, it has been proposed to polymerize the additives as disclosed, e.g., in Japanese Patent Application (OPI) No. 543I2/80 or to prevent vaporization of the additives as disclosed, e.g., in Japanese Patent Application (OPI) No. I55405/84.

On the other hand, stabilizers with heightened performances have been developed from the viewpoint of cost incurred as described in Japanese Patent Application (OPI) Nos. 7I486/77, 73886/77, 67749/78 and 86645/84, etc.

Among the previously studied stabilizers, piperidine derivatives having a triazine ring are recognized to produce great effects in improvement of weather resistance. Polyolefin resins having incorporated therein a stabilizer having a triazine ring in the molecule thereof provide molded products having excellent weather resistance. It has been revealed, however, that the stabilizer causes coloration or discoloration of the molded products during storage, which seriously impairs the commercial value of the products. It is difficult to prevent this coloration or discoloration by conventional phosphorus-based stabilizers known to be effective on prevention of yellowing, and a solution of this problem has been keenly demanded.

An object of this invention is to eliminate the above-described problem without impairing improved weather resistance and to provide a resin composition which has not only excellent weather resistance but is also free from coloration or discoloration.

According to the present invention polyolefins incorporating a stabilizer, in an amount of from 0.01 to 1.0 parts by weight based on 100 parts by weight of the polyolefin, having a triazine ring in the molecule thereof are prevented from coloration or discoloration by adding thereto a polymer having an acidic hydrogen atom. Stabilizers having a triazine ring in their molecule are among various stabilizers added to polyolefins to prevent a reduction in chemical or mechanical properties due to light, heat, oxygen, moisture, etc. either in outdoor or indoor use, and according to the invention coloration or discoloration of the polyolefin is prevented without impairing the performance of the stabilizer.

Stabilizers which can be used in the present invention carry a triazine ring in the molecule thereof and, to improve performance, preferably further contain one or more of a phenolic hydroxyl group, an amino group, a phosphorus-oxygen bond and a thioether linkage. Therefore, stabilizers which can be used preferably in this invention include benzophenone derivatives and triazole derivatives each having a triazine ring in the molecule.

Among these stabilizers, the particularly preferred are those having a triazine ring and a piperidine ring and/or a phenolic hydroxyl group in the molecule thereof. The amino group in the piperidine ring may be either secondary or tertiary, and at least one of the carbon atoms adjacent to the amino group is preferably substituted with one or two alkyl groups, such as methyl or ethyl groups. The more preferred are 2,2,6,6-tetraalkyl-substituted piperidine derivatives having a triazine ring in their molecule.

Further, in the compounds having a phenolic hydroxyl group, at least one of the ortho positions with respect to the phenolic hydroxyl group is preferably substituted with an alkyl group, such as a methyl group, an ethyl group or a t-butyl group. Such compounds include, for example, 2,6-dialkyl-substituted phenol derivatives having a triazine ring in their molecule.

Specific examples of the stabilizers having a triazine ring in their molecule which can be used in the present invention are poly[[6-[(I,I,3,3-tetramethyl-butyl)amino]-I,3,5-triazine-2,4-diyl][(2,2,6,6-tetramethyl-4-piperidyl)imino]hexamethylene[(2,2,6,6-tetramethyl-4-piperidyl)imino]], poly[(6-morpholino-s-triazine-2,4-diyl)[(2,2,6,6-tetramethyl-4-piperidyl)imino]hexamethylene-[(2,2,6,6-tetramethyl-4-piperidyl)imino]] and 2,4-bis-(n-octylthio)-6-(4-hydroxy-3,5-di-t-butylanilino)-I,3,5-triazine.

In addition, compounds disclosed in Japanese Patent Application (OPI) Nos. 7I486/77, 73886/77, 67749/78 and 86645/84 can also be used.

The polymers having an acidic hydrogen atom which can be used in the present invention include polymers having functional groups, such as a carboxyl group, a sulfo group, a phospho group, and the like. Polymers having a carboxyl group are particularly preferred, with copolymers of α-olefins and α, β-unsaturated carboxylic acids being more preferred.

The carboxyl group-containing polymers are generally copolymers comprising α-olefins and α,β-unsaturated carboxylic acids, and can be obtained by directly copolymerizing an α-olefin, e.g., ethylene, propylene, l-butene, 3-methyl-l-butene, 3-methyl-l-pentene, and an α,β-unsaturated carboxylic acid, e.g., acrylic acid, methacrylic acid, ethacrylic acid, itaconic acid, maleic acid, fumaric acid, methyl hydrogenmaleate, methyl hydrogenfumarate, ethyl hydrogenfumarate, in the presence of a free radical polymerization initiator, e.g., azo compounds, peroxides, etc., under high temperature and high pressure conditions, for example, at about 100°C to 300°C at about 50 to 3,000 atm.

Graft copolymers in which an α,β-unsaturated carboxylic acid is grafted to an olefinic polymer can also be used. In the case of olefinic polymers except for ethylenic polymers, the graft copolymers are particularly effective.

Specific examples of such copolymers are ethylene-acrylic acid copolymers, ethylene-methacrylic acid copolymers, ethylene-itaconic acid copolymers, ethylene-methyl hydrogenmaleate copolymers, ethylene-maleic acid copolymers, ethylene-acrylic acid-methyl methacrylate terpolymers, ethylene-methacrylic acid-ethyl acrylate terpolymers, ethylene-itaconic acid-methyl methacrylate terpolymers, ethylene-methyl hydrogenmaleate-ethyl acrylate terpolymers, ethylene-methacrylic acid-vinyl acetate terpolymers, ethylene-acrylic acid-vinyl alcohol terpolymers, ethylene-propylene-acrylic acid terpolymers, ethylene-styrene-acrylic acid terpolymers, ethylene-methacrylic acid-acrylonitrile terpolymers, ethylene-fumaric acid-vinylmethyl ether terpolymers, ethylene-vinyl chloride-acrylic acid terpolymers, ethylene-vinylidene chloride-acrylic acid terpoymers, ethylene-vinyl fluoride-methacrylic acid terpolymers, ethylene-chlorotrifluoroethylene-methacrylic acid terpolymers, acrylic acid-grafted polyethylene copolymers, methacrylic acid-grafted polyethylene copolymers, maleic acid-grafted polyethylene copolymers, acrylic acid-grafted ethylene-propylene copolymers, methacrylic acid-grafted ethylene-l-butene copolymers, acrylic acid-grafted ethylene-vinyl acetate copolymers, methacrylic acidgrafted ethylene-vinyl acetate copolymers, maleic acidgrafted ethylene-vinyl acetate copolymers, acrylic acid-grafted ethylene-ethyl acrylate copolymers, methacrylic acid-grafted ethylene-ethyl acrylate copolymers, maleic acid-grafted ethylene-ethyl acrylate copolymers, methacrylic acid-grafted polypropylene copolymers, acrylic acid-grafted poly(l-butene) copolymers, acrylic acid-grafted poly(3-methyl-l-butene) copolymers, acrylic acid-and ethyl acrylate-grafted polyethylene copolymers.

Example of the α,β-unsaturated carboxylic acid copolymers include not only copolymers with α-olefins but also styrene-acrylic acid copolymers, styrene-methacrylic acid copolymers, styrene-acrylic acid-methyl methacrylate terpolymers, styrene-methacrylic acid-ethyl acrylate terpolymers, styrene-acrylic acid-ethyl acrylate terpolymers and styrene-methacrylic acid-methyl methacrylate terpolymers.

The polyolefins which can be used in the present invention are generally called polyolefins, such as polyethylene, polypropylene, poly(l-butene), poly(4-methyl-l-pentene), propylene-ethylene block copolymers, propylene-ethylene random copolymers, propylene-l-butene copolymers, ethylene-l-butene copolymers, ethylene-l-hexene copolymers, ethylene-4-methyl-l-pentene copolymers, ethylene-l-octene copolymers, ethylene-vinyl acetate copolymers, ethylene-methyl acrylate copolymers, ethylene-ethyl acrylate copolymers and ethylene-methyl methacrylate copolymers.

These polyolefins can be prepared by known processes. The polyolefins may be used in combinations of two or more thereof.

The amount of the stabilizer having a triazine ring in its molecule to be added to the polyolefin ranges from 0.01 to 1.0 part by weight, and preferably from 0.05 to 0.5 part by weight, based on 100 parts by weight of the polyolefin.

The amount of the polymer having an acidic hydrogen atom varies depending upon the concentration of the acidic hydrogen atom in the polymer, such that from 0.01 to 10 equivalents, preferably from 0.03 to 2 equivalents, and more preferably from 0.05 to 1 equivalent, of an acidic hydrogen atom are incorporated per triazine ring in the above-described stabilizer.

The polyolefin compositions according to the present invention may further contain, if desired other various stabilizers, anti-fogging agents, anti-statics, lubricants, fillers, flame retardants, pigments, and the like.

Mixing of the polyolefins with the stabilizers and polymers according to the present invention can be carried out by generally employed methods by the use of a Banbury mixer, a mixing roll, an extruder, and the like.

This invention will now be illustrated in greater detail with reference to the following Examples, but it should be understood that they are not intended to limit the present invention. In these Examples, all the parts and percents are by weight unless otherwise indicated.

EXAMPLES 1 TO 11 AND COMPARATIVE EXAMPLES 1 TO 12

A polyolefin, a stabilizer having a triazine ring (Stabilizer A, B or C) and a polymer having an acidic hydrogen atom (Polymer I, II or III) and, in some cases, other additive were mixed according to the formulation as shown in Table I and kneaded in a Brabender Plastograph at 160°C for 10 minutes. The resulting compound was press-molded at 150°C into a sheet of 2 mm in thickness.

The resulting sheet was determined for yellow index (YI) immediately after the production ($YI_0$) and after preservation in an oven kept at 60°C and 90% RH (relative humidity) for 20 days ($YI_{20}$). A differ-

3

ence ($\Delta$YI) between $YI_{20}$ and $YI_0$ was obtained to evaluate coloration or discoloration. The results obtained are shown in Table I, wherein the smaller the $YI_0$ value, the less the initial coloration; and the smaller the difference $\Delta$YI, the slower the progress of coloration or discoloration.

The materials used in Examples I to II and Comparative Examples I to I2 are as follows:

Polyolefins:

Polyethylene: Sumikathene® L2II (a trade name of Sumitomo Chemical Co., Ltd. for high-pressure radical-polymerized low-density polyethylene; MFR (melt flow rate = 2 g/I0 min; density = 0.924 g/cm³)
Ethylene-vinyl acetate copolymer: Evatate® D202I (a trade name of Sumitomo Chemical Co., Ltd.; MFR I.5 g/I0 min; vinyl acetate content = I0%)

Stabilizer With Triazine Ring:

Stabilizer A: Poly[[6-[(I,I,3,3-tetramethylbutyl)amino]-I,3,5-triazine-2,4-diyl][(2,2,6,6-tetramethyl-4-piperidyl)imino]hexamethylene[(2,2,6,6-tetramethyl-4-piperidyl)imino]]
Stabilizer B: Poly[(6-morpholino-s-triazine-2,4-diyl)-[(2,2,6,6-tetramethyl-4-piperidyl)imino]-hexamethylene[(2,2,6,6-tetramethyl-4-piperidyl)imino]]
Stabilizer C: 2,4-Bis-(n-octylthio)-6-(4-hydroxy-3,5-di-t-butylanilino)-I,3,5-triazine

Polymer With Acidic Hydrogen Atom:

Polymer I: Ethylene-acrylic acid copolymer; MFR = 300 g/I0 min; acrylic acid content = 20%
Polymer II: Ethylene-acrylic acid copolymer; MFR = 9 g/I0 min; acrylic acid content = 8%
Polymer III: Ethylene-methacrylic acid copolymer; MFR = I0 g/I0 min; methacrylic acid content = I0%

EP 0 220 897 B1

TABLE 1

| Ex. No. | Polyolefin | Stabilizer (Amount: part) | | Polymer (Amount: part) | | Other Additive (Amount: part) | $YI_0$ | $YI_{20}$ | $\Delta YI$ |
|---|---|---|---|---|---|---|---|---|---|
| 1 | Polyethylene | A | (0.1) | I | (0.2) | none | 4.1 | 11.4 | 7.3 |
| 2 | " | " | " | II | (0.5) | none | 4.2 | 12.2 | 8.0 |
| 3 | " | " | (0.3) | I | (0.4) | none | 4.7 | 13.5 | 8.3 |
| 4 | " | " | " | II | (2.0) | none | 6.6 | 14.9 | 8.3 |
| 5 | " | " | " | III | (0.4) | none | 5.3 | 11.3 | 6.0 |
| 6 | " | B | (0.3) | I | (0.4) | none | 7.5 | 14.3 | 7.3 |
| 7 | " | C | (0.3) | " | " | none | 9.9 | 11.7 | 1.8 |
| 8 | " | A | (0.3) | " | " | Sumilizer® BHT[1] (0.04) | 4.8 | 12.5 | 7.7 |
| 9 | " | " | " | " | " | Sumilizer® BHT[1] (0.04) Sandostab® P-EPQ[2] (0.02) | 4.2 | 11.4 | 7.2 |
| 10 | Ethylene-vinyl acetate copolymer | " | " | " | (0.7) | Sumilizer® BHT[1] (0.04) | 6.3 | 17.0 | 10.7 |
| 11 | " | " | " | " | " | Irganox® 1010[3] (0.1) Sumilizer® BHT[1] (0.04) | 5.0 | 16.6 | 11.6 |
| Comparative Ex.1 | Polyethylene | " | (0.1) | none | | none | 5.0 | 21.7 | 16.7 |
| 2 | " | " | (0.3) | none | | none | 6.0 | 24.3 | 18.3 |

/to be continued

EP 0 220 897 B1

TABLE 1 (cont'd.)

| Cmp. Ex. No. | Polyolefin | Stabilizer (Amount: part) | | Polymer (Amount: part) | Other Additive (Amount: part) | $YI_0$ | $YI_{20}$ | $\Delta YI$ |
|---|---|---|---|---|---|---|---|---|
| 3 | Polyethylene | A | (0.3) | none | Irganox® 1076[4] (0.1) Sandostab® P-EPQ[2] (0.05) | 5.5 | 30.9 | 25.4 |
| 4 | " | " | " | none | Irganox® 1076[4] (0.1) Ultranox® 626[5] (0.05) | 6.6 | 29.1 | 22.5 |
| 5 | " | " | " | none | Irganox® 1010[3] (0.1) | 10.0 | 28.1 | 18.1 |
| 6 | " | " | " | none | Sandostab® P-EPQ[2] (0.3) | 5.1 | 22.5 | 17.4 |
| 7 | " | " | " | none | Irganox® B900[6] (0.1) | 5.2 | 22.2 | 16.0 |
| 8 | " | B | (0.1) | none | none | 6.8 | 29.2 | 22.4 |
| 9 | " | " | (0.3) | none | none | 6.0 | 28.6 | 22.6 |
| 10 | " | C | (0.3) | none | none | 10.5 | 29.1 | 18.6 |
| 11 | Ethylene-vinyl acetate copolymer | A | (0.3) | none | Sumilizer® BET[1] (0.04) | 7.6 | 25.2 | 17.6 |
| 12 | " | " | " | none | Irganox® 1010[3] (0.1) Sumilizer® BHT[1] (0.04) | 7.5 | 25.7 | 18.2 |

[Note]

I): a trade name of Sumitomo Chemical Co., Ltd. for antioxidant, 4-methyl-2,6-di-t-butylphenol

2): a trade name of Sandoz Ltd. for anti-oxidant, tetrakis(2,4-di-t-butylphenyl)-4,4-bisphenylylenedi-phosphonite

3): a trade name of Ciba-Geigy AG for anti-oxidant, pentaerythrityl-tetrakis[3-(3,5-di-t-butyl-4-hydroxyphenyl)propionate]

4): a trade name of Ciba-Geigy AG for anti-oxidant, octadecyl[3-(3,5-di-t-butyl-4-hydroxyphenyl)propionate]

5): a trade name of Borg-Warner Corp. for antioxidant, bis(2,4-di-t-butylphenyl)-pentaerythritol diphosphite

6): a trade name of Ciba-Geigy AG for anti-oxidant, a blend of Irganox® I076 and Phosphonite® I68 (I/4) -- Phosphonite® I68 is a trade name of Ciba-Geigy AG for antioxidant, tris(2,4-di-t-butylphenyl)-phosphonite

## EXAMPLES I2 AND I3 AND COMPARATIVE EXAMPLES I3 TO I6

The polyolefins, stabilizers and polymers as used in Examples I to II and Comparative Examples I to I2 were mixed as indicated in Table 2 by means of a Banbury mixer at I50°C for I0 minutes, and the compound was pelletized by a single-screw extruder having a diameter of 65 mm.

The pellets were extruded in a blown film having a thickness of 20 μm using a blown-film extruder having a die diameter of 40 mm at a temperature of 200°C.

The resulting film was subjected to outdoor weathering test by spreading on the sand for 60 days in summer. Elongations of the film before and after the outdoor weathering were measured in accordance with the test method of agricultural polyethylene films (JIS-K678I), and an elongation retention was calculated from the following equation:

$$\text{Elongation Retention (\%)} = \frac{\text{Elongation After Weathering}}{\text{Elongation Before Weathering}} \times 100$$

Further, the film before the weathering was press-molded into a sheet of 2 mm in thickness at I50°C, and $YI_0$, $YI_{20}$ and $\Delta YI$ were determined in the same manner as described in Example I to evaluate coloration or discoloration.

The results obtained are shown in Table 2.

TABLE 2

| Example No. | Polyolefin | Stabilizer (Amount: part) | | Polymer (Amount: part) | | $YI_0$ | $YI_{20}$ | $\Delta YI$ | Elongation Retention | |
|---|---|---|---|---|---|---|---|---|---|---|
| | | | | | | | | | MD (%) | CD (%) |
| Example 12 | Polyethylene-HP[*1] | A | (0.1) | I | (0.1) | 4.2 | 17.6 | 13.4 | 91 | 77 |
| 13 | Polyethylene-LL[*2] | A | (0.15) | I | (0.15) | 7.3 | 18.0 | 11.3 | 87 | 70 |
| Comparative 13 | Polyethylene-HP[*1] | A | (0.1) | | none | 5.6 | 25.8 | 20.2 | 93 | 76 |
| 14 | " | | none | | none | 3.3 | 16.2 | 12.9 | 47 | 14 |
| 15 | Polyethylene-LL[*2] | A | (0.15) | | none | 9.6 | 31.1 | 21.5 | 84 | 68 |
| 16 | " | | none | | none | 9.1 | 18.3 | 9.3 | 23 | 8 |

Note: 
[*1]: Sumikathene® F210-6 (a trade name of Sumitomo Chemical Co., Ltd. for high-pressure radical-polymerized low-density polyethylene)

[*2]: Sumikathene®-L FA101-1 (a trade name of Sumitomo Chemical Co., Ltd. for ethylene-1-butene copolymer; linear low-density polyethylene)

EP 0 220 897 B1

As described above, the polyolefin compositions in accordance with the present invention are excellent resin materials which can be prevented from coloration or discoloration without impairing the performance properties possessed, by the stabilizers and are thereby suitable for outdoor use.

## Claims

1. A polyolefin composition comprising a polyolefin incorporating in an amount of from 0.01 to 1.0 parts by weight based on 100 parts by weight of the polyolefin, a stabilizer having a triazine ring in the molecule thereof, characterised in that the polyolefin also incorporates a polymer having an acidic hydrogen atom.

2. A composition as claimed in claim 1, wherein said stabilizer has a piperidine ring and/or a phenolic hydroxyl group in the molecule thereof.

3. A composition as claimed in claim 2, wherein said stabilizer has a piperidine ring substituted with one or two alkyl groups at at least one of the carbon atoms adjacent to the amino group.

4. A composition as claimed in claim 3, wherein said stabilizer is a 2,2,6,6-tetraalkyl-substituted piperidine derivative having a triazine ring in the molecule thereof.

5. A composition as claimed in any preceding claim, wherein said stabilizer has a phenolic hydroxyl group, at least one of the ortho positions with respect to the phenolic hydroxyl group being substituted with an alkyl group.

6. A composition as claimed in claim 5, wherein said stabilizer is a 2,6-dialkyl-substituted phenol derivative having a triazine ring in the molecule thereof.

7. A composition as claimed in any preceding claim, wherein said polymer is a copolymer of an $\alpha$-olefin and an $\alpha,\beta$-unsaturated carboxylic acid.

8. A composition as claimed in any preceding claim, wherein said stabilizer is present in an amount of from 0.05 to 0.5 part by weight based on 100 parts by weight of the polyolefin.

9. A composition as claimed in any preceding claim, wherein said acidic hydrogen atom in the polymer is present in an amount of from 0.01 to 10 equivalents per triazine ring in the stabilizer.

## Patentansprüche

1. Polyolefinzusammensetzung, enthaltend ein Polyolefin, das einen Stabilisator mit einem Triazinring im Molekül in einer Menge von 0,01 bis 10 Gew.-Teile pro 100 Gew.-Teile des Polyolefins enthält, dadurch gekennzeichnet, daß das Polyolefin ferner ein Polymer mit einem sauren Wasserstoffatom aufweist.

2. Zusammensetzung nach Anspruch 1, wobei der Stabilisator einen Piperidinring und/oder eine phenolische Hydroxylgruppe im Molekül aufweist.

3. Zusammensetzung nach Anspruch 2, wobei der Stabilisator einen Piperidinring aufweist, der mit einem oder zwei Alkylresten an mindestens einem der Kohlenstoffatome neben der Aminogruppe substituiert ist.

4. Zusammensetzung nach Anspruch 3, wobei der Stabilisator ein 2,2,6,6-Tetraalkyl-substituiertes Piperidinderivat mit einem Triazinring im Molekül ist.

5. Zusammensetzung nach einem der vorangehenden Ansprüche, wobei der Stabilisator eine phenolische Hydroxylgruppe aufweist und mindestens eine der ortho-Stellungen zur phenolischen Hydroxylgruppe mit einem Alkylrest substituiert ist.

6. Zusammensetzung nach Anspruch 5, wobei der Stabilisator ein 2,6-dialkylsubstituiertes Phenolderivat mit einem Triazinring im Molekül ist.

7. Zusammensetzung nach einem der vorangehenden Ansprüche, wobei das Polymer ein Copolymer eines $\alpha$-Olefins und einer $\alpha,\beta$-ungesättigten Carbonsäure ist.

8. Zusammensetzung nach einem der vorangehenden Ansprüche, wobei der Stabilisator in einer Menge von 0,05 bis 0,5 Gew.-Teile pro 100 Gew.-Teile des Polyolefins vorhanden ist.

9. Zusammensetzung nach einem der vorangehenden Ansprüche, wobei das saure Wasserstoffatom in dem Polymer in einer Menge von etwa 0,01 bis 10 Äquivalente pro Triazinring im Stabilisator vorhanden ist.

## Revendications

1. Une composition de polyoléfine comprenant une polyoléfine contenant de 0,01 à 10 parties en poids, pour 100 parties en poids de la polyoléfine, d'un stabilisant contenant dans sa molécule des noyaux triazine, caractérisée en ce que la polyoléfine comprend également un polymère ayant des atomes d'hydrogène acides.

2. Composition selon la revendication 1, dans laquelle ledit stabilisant contient dans sa molécule des noyaux pipéridine et/ou des groupes hydroxyles phénoliques.

3. Composition selon la revendication 2, dans laquelle ledit stabilisant contient des noyaux pipéridine substitués par un ou deux groupes alkyles sur l'un au moins des atomes de carbone voisins du groupe amino.

4. Composition selon la revendication 3, dans laquelle ledit stabilisant est un dérivé de 2,2,6,6-tétraalkyl-pipéridine ayant dans sa molécule des noyaux triazine.

5. Composition selon l'une quelconque des revendications précédentes, dans laquelle ledit stabilisant contient un groupe hydroxyle phénolique, l'une au moins des positions ortho par rapport au groupe hydroxyle phénolique étant substituée par un groupe alkyle.

6. Composition selon la revendication 5, dans laquelle ledit stabilisant est un dérivé de 2,6-dialkyl-phénol contenant dans sa molécule des noyaux triazine.

7. Composition selon l'une quelconque des revendications précédentes, dans laquelle ledit polymère est un copolymère d'une $\alpha$-oléfine et d'un acide carboxylique $\alpha,\beta$-insaturé.

8. Composition selon l'une quelconque des revendications précédentes, dans laquelle ledit stabilisant est présent en quantité de 0,05 à 0,5 partie en poids pour 100 parties en poids de la polyoléfine.

9. Composition selon l'une quelconque des revendications précédentes, dans laquelle lesdits atomes d'hydrogène acides sont présents dans le polymère en quantité de 0,01 à 10 équivalents par noyau triazine dans le stabilisant.